# EUROPÄISCHE PATENTSCHRIFT

(11) **EP 3 348 951 B1**
(45) Veröffentlichungstag und Bekanntmachung des Hinweises auf die Patenterteilung: **26.02.2020**
(21) Anmeldenummer: 17207016.1
(22) Anmeldetag: 13.12.2017
(51) Int. Cl.: F41G 1/38, G02B 7/02, G02B 23/14

(54) **UMKEHRSYSTEM FÜR ZIELFERNROHRE UND ZIELFERNROHR MIT EINEM SOLCHEN**
REVERSING SYSTEM FOR TELESCOPIC SIGHTS AND TELESCOPIC SIGHT COMPRISING SAME
SYSTÈME INVERSEUR DE LUNETTE DE VISÉE ET LUNETTE DE VISÉE POURVUE D'UN TEL SYSTÈME INVERSEUR

(30) Priorität: 13.01.2017 DE 102017100652
(43) Veröffentlichungstag der Anmeldung: 18.07.2018
(73) Patentinhaber: SCHMIDT & BENDER GmbH & Co. KG, 35444 Biebertal (DE)
(72) Erfinder: Fuhrmann, Lothar, 35649 Bischoffen (DE); Höller, Jonas Joachim, 35423 Lich (DE); Deusing, Hartmut, 59757 Arnsberg-Holzen (DE)
(74) Vertreter: Patentanwälte Olbricht Buchhold Keulertz

(56) Entgegenhaltungen:
- JP-A- 2002 182 093
- JP-A- 2007 114 540

## Beschreibung

Die Erfindung betrifft ein Umkehrsystem für Zielfernrohre gemäß dem Oberbegriff von Anspruch 1 sowie ein Zielfernrohr mit einem solchen nach Anspruch 14.

Zielfernrohre werden bei der Jagd und beim Militär dafür eingesetzt, mittels Waffen Ziele in großen Distanzen anzuvisieren. Hierfür verfügen sie über eine Linsenanordnung innerhalb eines Gehäuses, die ein Zielobjekt vergrößert. Folglich ist jedoch der Blickwinkel sehr eingeschränkt und Ziele in kürzerer Distanz können schlecht anvisiert werden. Um auch diese Ziele effektiv ins Visier nehmen zu können, sieht der Stand der Technik eine variable Vergrößerung (Zoom) vor. Zudem wird das anvisierte Ziel in der Objektivebene seitenverkehrt und auf dem Kopf stehend abgebildet und muss deshalb korrigiert werden.

Zur technischen Umsetzung dieser Korrektur kommt ein Umkehrsystem innerhalb des Zielfernrohres zum Einsatz. Der Begriff Umkehrsystem wird im Weiteren in der Anmeldung verwendet und ist gleichbedeutend mit der Bezeichnung Umkehrvorrichtung. Das Umkehrsystem ermöglicht eine axiale Verschiebung von wenigstens einem optischen Element innerhalb des Umkehrsystems, regelmäßig jedoch auch eine unabhängige bzw. definierte Verschiebung von zwei optischen Elementen. Zu den optischen Elementen zählen dabei unter anderem Linsen, Kittlinsen und Absehen. Hierdurch wird das Bild aufgerichtet und in der Okularebene, wo es betrachtet wird, abgebildet. In gängigen Zielfernrohren ist das Absehen in der Objektiv- oder Okularebene vorgesehen und das Umkehrsystem ist in einem Innentubus des Zielfernrohrs angeordnet.

Ein solches Umkehrsystem besteht dabei zumeist aus einer inneren Führungshülse mit einer Innenkulisse, insbesondere einer Linearkulisse sowie einer Außenhülse mit einer ersten Außenkulisse und optional einer zweiten Außenkulisse, wobei die Außenhülse axialfest und drehbar auf der Innenhülse gelagert ist. Die beiden Außenkulissen beschreiben jeweils eine Kurvenbahn. In der Führungshülse sind weiterhin eine erste und zweite Fassung mit je einer Linse verschiebbar gelagert. Dabei ist ein erster Führungsstift mit der ersten Fassung verbunden und zumindest teilweise innerhalb der Linearkulisse und der ersten Außenkulisse angeordnet. Äquivalent ist ein zweiter Führungsstift mit der zweiten Fassung verbunden und zumindest teilweise innerhalb der Linearkulisse und der zweiten Außenkulisse angeordnet. Die Abstände zwischen den Linsen des optischen Umkehrsystems und der Objektivebene des Zielfernrohrs können nunmehr variiert werden. Hierdurch kann die Vergrößerung verändert werden und das Bild steht nicht auf dem Kopf.

Kritisch hierbei ist, dass die Linsen sehr genau an den vorgesehenen Positionen angeordnet sein müssen, um ein scharfes Bild für den Schützen erzeugen zu können. Positionsabweichungen von 10⁻⁵ m sind bereits abträglich für die Bildgüte und führen zu Parallaxefehlern. D.h. die Zielmarkierung und der tatsächliche Treffpunkt eines Projektils weichen voneinander ab. Deshalb sind alle beweglichen Bauteile mit sehr engen Toleranzen auszulegen und dürfen zueinander nahezu kein Spiel haben. Oftmals wird sogar ein Übermaß gewählt, um Spiel zu verhindern. Folglich kommt es zu einem schwergängigen Verstellverhalten des Umkehrsystems. Besonders kritisch sind die Kontaktbereiche zwischen den Führungsstiften und den Kulissen.

Für den Eingriff der Führungsstifte in die Kulissen sind im Stand der Technik unter anderem Metallschrauben bekannt. Die Außenhülse mit den Kurvenbahn-Kulissen, besteht ebenfalls aus Metall. Bei einer derartigen Kombination von Metallschraube mit Metall-Außenhülse ist ein gewisses Grundspiel vorhanden, wodurch die Metallschraube in der Kurvenbahn verschoben werden kann. Ein derartiges Grundspiel hat jedoch den Nachteil, dass die Umkehrlinsen nicht definiert ausgerichtet sind und dies ursächlich für eine Parallaxeabweichung sein kann. Reduziert man das Spiel auf ein Minimum, führt dies bei wetterbedingten thermischen Schwankungen zu einem Verklemmen durch die Wärmeausdehnungen der Bauteile. Dies verhindert nicht nur eine momentane Verstellbarkeit, sondern führt auch zu dauerhaften Schäden bei einer zu kräftigen Betätigung durch den Schützen. Besonders häufig treten diese Probleme bei sehr tiefen Temperaturen, z.B. -40°C, auf.

Aus DE 10 2011 000 404 A1 ist ein Umkehrsystem für Zielfernrohre bekannt, das eine Führungshülse aufweist, in der eine Linearkulisse angeordnet ist, wobei eine Außenhülse mit einer Außenkulisse axialfest und drehbar auf der Führungshülse gelagert ist. In der Führungshülse ist eine Fassung mit einem optischen Element und mit einem die Linearkulisse und die Außenkulisse durchdringenden Führungsstift axialverschieblich gelagert. Der Führungsstift weist eine erste Hülse und eine zweite Hülse auf, wobei beide Hülsen auf einer gemeinsamen Achse gelagert sind, und die erste Hülse innerhalb der Außenkulisse bewegbar ist und die zweite Hülse innerhalb der Linearkulisse bewegbar ist. Nachteilhaft an dieser Ausgestaltung sind hohe Reibkräfte, die teilweise zu einem Gleiten der Hülsen in den Kulissen führen, insbesondere bei sehr niedrigen Umgebungstemperaturen. Dies bedingt Verschleiß, der zu einer abnehmend präzisen Verstellung und in Ausnahmefällen zu Staubpartikeln in der Optik führt. JP 2007 114540 A und JP 2002 182093 A zeigen ebenfalls bekannte Umkehrsysteme.

Aufgabe der Erfindung ist es daher, eine Umkehrsystem zu entwickeln, das in einem sehr großen Temperaturspektrum und insbesondere auch bei sehr niedrigen Temperaturen zerstörungsfrei und komfortabel einsetzbar ist, ohne dass Einbußen bei der Bildqualität und der Parallaxegenauigkeit auftreten. Die Lösung sollte einfach herstellbar, montierbar und kostengünstig sein sowie eine lange Lebensdauer erreichen. Vorzugsweise sollte die Lösung auch geeignet sein, Zielfernrohre nachrüsten zu können.

Hauptmerkmale der Erfindung sind im kennzeichnenden Teil von Anspruch 1 sowie in Anspruch 14 angegeben. Ausgestaltungen sind Gegenstand der Ansprüche 2 bis 13.

Die Erfindung betrifft ein Umkehrsystem für Zielfernrohre mit einer Führungshülse, einer Außenhülse und einer Fassung mit einem optischen Element, wobei die Außenhülse axialfest und drehbar auf der Führungshülse gelagert und in der Führungshülse eine Innenkulisse, vorzugsweise eine Linearkulisse, und in der Außenhülse eine Außenkulisse ausgebildet ist, wobei die Fassung axialverschieblich in der Führungshülse gelagert ist und einen Führungsstift aufweist, der in die Innenkulisse und die Außenkulisse hineinragt oder diese durchdringt, wobei der Führungsstift eine Trägerachse aufweist, auf der ein erstes Drehlager und ein zweites Drehlager sitzen, wobei das erste Drehlager innerhalb der Außenkulisse und das zweite Drehlager innerhalb der Innenkulisse geführt ist, und wobei das erste Drehlager und/oder das zweite Drehlager in seinem Zentrum einen auf der Trägerachse sitzenden Innenring und einen drehbar auf dem Innenring gelagerten Außenring aufweist.

Durch das Vorsehen von Drehlagern wird eine besonders geringe Reibung beim Verschieben durch die Kulissen bewirkt, wenn die Außenhülse relativ zur Innenhülse gedreht wird. Durch das Vorsehen von zwei Drehlagern, können diese unterschiedlich schnell und bei Bedarf auch in gegengesetzte Richtungen rotieren. Hierdurch sind die auf die Drehlager wirkenden Scherkräfte gering und Materialschäden werden wirksam vermieden. Zudem sind die notwendigen Verstellkräfte gering und die Umkehrvorrichtung verklemmt selbst bei sehr niedrigen Temperaturen nicht. In dem Bereich, an welchem die größte Kraft von einer der Kulissen in eines der Drehlager eingeleitet wird, ist die Haftung des Drehlagers an der kontaktierten Kulisse am größten. Bei einer Verdrehung der Außenhülse zur Führungshülse kann das Drehlager nunmehr über diesen Bereich abrollen, wohingegen es in weniger belasteten Bereichen, insbesondere der gegenüberliegenden Seite, über die Kulisse rutscht.

Von einem Drehlager mit einem Außenring wird insbesondere letzterer in der Innenkulisse oder der Außenkulisse geführt. Er wird sich dann auf dem Innenring drehen. Innenring und Außenring können dabei mit möglichst geringen Reibkräften aneinander gelagert sein. Die Trägerachse sollte quer, vorzugsweise senkrecht zur Verschiebeachse der Fassung ausgerichtet sein. Das vereinfacht eine präzise und platzsparende Bewegungskinematik zwischen Außenhülse, Innenhülse und Fassung. In den meisten Zielfernrohren wird die Trägerachse dann auch quer, vorzugsweise senkrecht zur optischen Achse des Zielfernrohrs ausgerichtet sein.

Die Außenkulisse sollte eine Kurvenbahn sein. Diese hat zumeist eine spiralformähnliche Gestaltung, wobei jedoch meist keine konstante Steigung vorliegt. Somit ist auch der Vorschub der Fassung mit dem optischen Element je Verdrehungseinheit nicht konstant. Mittels der Kurvenbahn lässt sich so das Verstellverhalten an die optischen Effekte der Linse je nach Anordnungsposition anpassen. In sensiblen Positionen kann eine flache Steigung und in weniger sensiblen Positionen eine steilere Steigung vorgesehen werden. Zu steile Steigungen sind jedoch zu vermeiden, da bei diesen eine Selbsthemmung der Umkehrvorrichtung auftreten kann. Der Schütze kann nunmehr den Verstellbereich komfortabel nutzen und ein dazu vorgesehenes Stellrad kontinuierlich verdrehen, ohne dass sich die Vergrößerung unterschiedlich schnell bzw. sprunghaft ändert.

Als optische Elemente können unter anderem Linsen, Kittlinsen oder Absehen in der Fassung angeordnet sein.

Gemäß einer näheren Ausgestaltung sind das erste und zweite Drehlager in dem bzw. ihrem Zentrum zwischen einem Anschlag der Trägerachse und der Fassung eingespannt, vorzugsweise drehfest. Wobei Drehfestigkeit nur bei normalen betriebsgemäßen Bewegungskräften des Umkehrsystems erstrebenswert ist, nicht jedoch absolute Drehfestigkeit.

Der Anschlag ist vorzugsweise an einem ersten Ende der Trägerachse angeordnet. Die Trägerachse kann damit kurz ausgestaltet sein, ohne weit aus der Außenkulisse herauszuragen. In einer speziellen Ausführungsform ist an dem ersten Ende eine Werkzeugöffnung für ein Drehwerkzeug in der Trägerachse ausgebildet. Hierdurch lässt sich der Führungsstift einfach an der Fassung montieren. Vorzugsweise ist die Werkzeugöffnung eine Sechskantöffnung. Eine solche ermöglicht eine einfache Montage. Es kommen jedoch auch alternative Werkzeugöffnungen für andere Drehwerkzeuge wie Schlitz-, Kreuz- oder Torx-Schraubendreher in Betracht. Des Weiteren ragt die Werkzeugöffnung bevorzugt bis in einen Bereich, der radial innerhalb des ersten Drehlagers liegt. Damit wird ein besonders kurzer Führungsstift erzielt, der nicht weit aus der Außenkulisse hervorsteht.

Bei einer speziellen Ausführungsform ist der Anschlag durch einen von der Trägerachse ausgebildeten Kopfabsatz ausgebildet. Dies erlaubt eine stabile und kompakte Ausgestaltung der Trägerachse, die ähnlich zu einer Schraube sein kann. Insbesondere kann der Kopfabsatz scheibenförmig ausgebildet sein. Dann ist er besonders flach und kompakt.

Ein optionales Merkmal besteht darin, dass die Trägerachse eine Abdeckplatte ausbildet, insbesondere an ihrem ersten Ende, wobei die Abdeckplatte beabstandet von dem ersten Drehlager angeordnet ist. Hierdurch wird das erste Drehlager geschützt. Hierzu überspannt die Abdeckplatte wenigstens 2/3, bevorzugt wenigstens 3/4 und besonders bevorzugt wenigstens 4/5 der Stirnfläche des ersten Drehlagers. Die Stirnfläche ist insbesondere aus axialer Richtung der Trägerachse zu betrachten. Es bietet sich eine Ausführung an, bei der die Abdeckplatte einen kreisförmigen Umfang hat. Die optionalen Ausgestaltungen können zu einer Ausgestaltung führen, bei der der Anschlag und die Abdeckplatte Teil des Kopfabsatzes am ersten Ende der Trägerachse sind. Vorzugsweise besteht der Kopfabsatz aus dem Anschlag und der Abdeckplatte.

Für eine möglichst kompakte Ausgestaltung des Umkehrsystems sollte der Kopfabsatz in die Außenkulisse hineinragen, insbesondere zumindest geringfügig. Damit eine gute Führung des ersten Drehlagers in der Außenkulisse erfolgen kann, bietet es sich an, dass der Kopfabsatz aus der Außenkulisse hervorsteht. Besonders zu bevorzugen ist es, wenn der Kopfabsatz zu wenigstens 2/3 aus der Außenkulisse hervorsteht. Außerdem ist es zu bevorzugen, wenn die Länge des Kopfabsatzes geringer ist als das erste Drehlager breit ist, insbesondere in axialer Richtung der Trägerachse.

Bei einer speziellen Ausführungsform ist der Außendurchmesser der Abdeckplatte kleiner als der Außendurchmesser des ersten Drehlagers. Das erlaubt ein Eintauchen der Abdeckplatte in die Außenkulisse, ohne dass diese miteinander kollidieren.

Eine einfache und kompakte Ausgestaltung ist optional erzielbar, wenn der Außendurchmesser des ersten Drehlagers dem Außendurchmesser des zweiten Drehlagers entspricht.

Eine preiswerte Grundform der Trägerachse wird erzielt, wenn der Innendurchmesser des ersten Drehlagers dem Innendurchmesser des zweiten Drehlagers entspricht. Zu diesem Vorteil führt insbesondere auch eine Weiterbildung, bei der das erste und zweite Drehlager auf einer gemeinsamen zylindrischen Oberfläche der Trägerachse sitzen.

Gemäß einer optionalen Ausführungsform, weist die Trägerachse an einem zweiten Ende ein Gewinde auf, vorzugsweise ein Außengewinde, das mit einem Gegengewinde, vorzugsweise ein Innengewinde, auf Seiten der Fassung verschraubt ist. Hierdurch ist das Führungsstift dauerhaft fest mit der Fassung verbindbar, kann jedoch zur Wartung auch wieder demontiert werden. Besonders bevorzugt ist die Einspannung des ersten und zweiten Drehlagers durch die Verschraubung des Gewindes mit dem Gegengewinde bewirkt. Hierzu kann ein definiertes Anzugsdrehmoment vorgesehen sein. Es wird dann eine feste und präzise Verbindung erzielt.

Nach einer besonderen Ausgestaltung ist das erste und/oder zweite Drehlager ein Wälzlager, vorzugsweise ein Kugellager oder Zylinderrollenlager. Mit solchen wird eine besonders geringe Reibung erzielt und das Umkehrsystem ist leichtgängig und präzise verstellbar. Bei einem Wälzlager sind zwischen dem Innenring und dem Außenring Wälzkörper angeordnet, insbesondere Kugeln oder Rollen, vorzugsweise Kugeln oder Zylinderrollen.

Weiterhin ist in einer speziellen Ausführungsform vorgesehen, dass der oder die Außenringe in axialer Richtung der Trägerachse beabstandet von benachbarten Bauteilen gelagert sind. Damit sind die Außenringe an ihren Stirnseiten freigestellt und haben hier keine Reibung. Sie drehen sich so sehr leichtgängig auf dem oder den Innenringen.

Es ist eine Ausführung zu bevorzugen, bei der das erste und zweite Drehlager entlang der Trägerachse nicht ineinandergreifen, beziehungsweise sich entlang der Trägerachse nicht überlappen/überschneiden. Dies ermöglicht beispielsweise kostengünstige Standardwälzlager als Drehlager einsetzen zu können.

Außerdem bietet sich eine Dimensionierung an, bei der das erste Drehlager schmäler ist als die Außenkulisse. Hierdurch wird längs der Trägerachse Platz neben dem Drehlager für Luftspalte oder weitere Bauteile freigehalten.

Ferner ist zu bevorzugen, wenn das zweite Drehlager schmäler ausgestaltet ist als die Innenkulisse. Auch dies verschafft längs der Trägerachse Platz neben dem Drehlager für Luftspalte oder weitere Bauteile.

Platz und zudem geringe Reibung sind weiterhin durch eine Dimensionierung erreichbar, nach der zwischen der Innenhülse und der Außenhülse über die Länge der Innenkulisse ein ringförmiger Luftspalt ausgebildet ist. Der Luftspalt ist vorzugsweise schmäler als die Innenkulisse oder das zweite Drehlager breit ist. Damit bleibt das Umkehrsystem kompakt. Die Innen- und Außenhülse sind vorzugsweise vor und hinter der Innenkulisse drehbar aneinander gelagert. Damit ist die Reibung zwischen der Innen- und Außenhülse beim Drehen gering.

Vorzugsweise ist der Außendurchmesser des ersten Drehlagers derart kleiner als die Außenkulisse breit, dass eine Spielpassung vorliegt, insbesondere eine Spielpassung mit sehr geringem Spiel. Es ist außerdem eine Dimensionierung zu bevorzugen, bei der der Außendurchmesser des zweiten Drehlagers derart kleiner ist als die Innenkulisse breit, dass eine Spielpassung vorliegt, insbesondere eine Spielpassung mit sehr geringem Spiel. Hierdurch werden jeweils eine präzise Führung der Fassung und eine hohe Bildgüte erzielt. Außerdem liegt das jeweilige Lager nur auf einer Seite der Kulisse an und kann über diesen Kontaktpunkt abrollen. Die gegenüberliegende Seite dreht frei an der Oberfläche der Kulisse vorbei. Des Weiteren können die Drehlager mit einer Übermaßpassung, insbesondere einer geringen Übermaßpassung, auf dem Führungsstift sitzen. Hierdurch sind sie korrekt positionier.

In einer speziellen Ausgestaltung, bei der das erste Drehlager und das zweite Drehlager jeweils einen auf der Trägerachse sitzenden Innenring und einen drehbar auf dem Innenring gelagerten Außenring aufweisen, ist vorgesehen, dass sich die Außenringe des ersten und zweiten Drehlagers nicht berühren. Damit wird verhindert, dass bei ungleichen Drehgeschwindigkeiten Reibung zwischen den Außenringen entstehen kann.

Gemäss der Erfindung, bei der das erste Drehlager und das zweite Drehlager jeweils einen auf der Trägerachse sitzenden Innenring und einen drehbar auf dem Innenring gelagerten Außenring aufweisen, ist vorgesehen, dass zwischen den Innenringen des ersten und zweiten Drehlagers ein erster Abstandhalter angeordnet ist, vorzugsweise ein Distanzringscheibe oder ein Distanzring. Damit können die Außenringe beabstandet voneinander fixiert sein.

Erfindungsgemäss weist der erste Abstandhalter im Zentrum eine größere Abstandsdicke auf als weiter außen. Damit werden die Innenringe der Drehlager auf Abstand gehalten und der äußere, dünnere Teil des ersten Abstandhalters ragt zwischen die Drehlager ohne diese zu berühren. Damit es zu keiner Kollision des ersten Abstandhalters mit der Innen- oder Außenhülse kommt, sollte der Außendurchmesser des ersten Abstandhalters kleiner sein als der größere Durchmesser aus der Gruppe Außendurchmesser des ersten Drehlagers und Außendurchmesser des zweiten Drehlagers. Zudem ist zu bevorzugen, wenn der Außendurchmesser des ersten Abstandhalters größer ist als der kleinere Durchmesser aus der Gruppe Innendurchmesser des Außenrings des ersten Drehlagers und Innendurchmesser des Außenrings des zweiten Drehlagers. Bei einer solchen Dimensionierung kann der größte Teil der Stirnfläche des größeren Drehlagers abgedeckt werden.

Eine präzise und einfache Montage gelingt, wenn der Innendurchmesser des ersten Abstandhalters im Wesentlichen dem Innendurchmesser des ersten Drehlagers und/oder des zweiten Drehlagers entspricht. Der Abstandhalter lässt sich dann auf einer gemeinsamen Umfangsfläche der Trägerachse lagern wie eines oder beide der Drehlager.

Bei einem Umkehrsystem, bei dem das zweite Drehlager einen auf der Trägerachse sitzenden Innenring und einen drehbar auf dem Innenring gelagerten Außenring aufweist, sieht eine optionale Ausführungsform vor, dass zwischen dem Innenring des zweiten Drehlagers und der Fassung ein zweiter Abstandhalter angeordnet ist, vorzugsweise ein Distanzringscheibe, ein Distanzring oder eine Distanzhülse. Optional kann der zweite Abstandhalter auch von einem Absatz an der Fassung ausgebildet sein. Hierdurch kann verhindert werden, dass der Außenring des zweiten Drehlagers an der Fassung reibt. Hierzu sollte der Außendurchmesser des zweiten Abstandhalters kleiner sein als der Innendurchmesser des Außenrings des zweiten Drehlagers.

Gemäß einer bevorzugten Ausgestaltung ragt das erste Drehlager nicht in die Innenkulisse und das zweite Drehlager nicht in die Außenkulisse hinein. Damit wird erreicht, dass die Drehlager nebeneinander angeordnet und kostengünstige Standarddrehlager verwendbar sind.

Die Drehlager basieren vorzugsweise im Wesentlichen auf einer Stahllegierung. Besonders bevorzugt bestehen die Innenhülsen der Drehlager aus einer abriebfesten Stahllegierung. Die Außenhülsen der Drehlager sollten vorzugsweise das gleiche Material aufweisen oder zumindest teilweise hieraus bestehen.

Gemäß einer speziellen Ausführungsform weist der Außenring des ersten Drehlagers und/oder der Außenring des zweiten Drehlagers einen inneren Lagerring und einen hierauf angeordneten äußeren Mantelring auf. Hierdurch lassen sich die Materialeigenschaften der Außenhülse auf die spezifischen Anforderungen anpassen. Vorzugsweise ist der äußere Mantelring fest mit dem inneren Lagerring verbunden. Hierdurch stabilisieren sie sich gegenseitig, es entstehen jedoch keine Relativbewegungen mit Reibung zwischen Lagerring und Mantelring. Der Mantelring kann beispielsweise auf den Lagerring aufgepresst sein, beispielsweise mit einer Übergangspassung oder Übermaßpassung. Alternativ kommen auch materialschlüssige Verbindungen oder Verklebungen in Betracht. Bevorzugt ist der Mantelring dicker als der Lagerring, insbesondere quer zur Trägerachse. Hierdurch steht Raum für eine elastische Verformung des Mantelrings zur Verfügung.

Der innere Lagerring besteht vorzugsweise aus einem härteren Material als der äußere Mantelring. Insbesondere bietet sich für den Lagerring ein Material basierend auf Eisen an, vorzugsweise ein Stahl oder eine Stahllegierung. Für den Mantelring bietet sich ein Material basierend auf Kunststoff, vorzugsweise aus Polyethylen (PE) oder Polyoxymethylen (POM) an. Hierdurch wird ein verschleißarmes, leises und angenehmes Verstellen ermöglicht, das zudem präzise ist.

In einer Weiterbildung des Umkehrsystems ist vorgesehen, dass eine zweite Außenkulisse in der Außenhülse ausgebildet ist, und in der Führungshülse eine zweite Fassung mit einem zweiten optischen Element und einem die Innenkulisse und die zweite Außenkulisse durchdringenden zweiten Führungsstift axialverschieblich gelagert ist, wobei der zweite Führungsstift eine Trägerachse aufweist, auf der ein drittes Drehlager und ein viertes Drehlager sitzen, wobei das dritte Drehlager innerhalb der zweiten Außenkulisse und das vierte Drehlager innerhalb der Innenkulisse geführt ist, und wobei das dritte Drehlager und/oder das vierte Drehlager in seinem Zentrum einen auf der Trägerachse sitzenden Innenring und einen drehbar auf dem Innenring gelagerten Außenring aufweist. Durch zwei Fassungen lassen sich insbesondere größere Zoombereiche erzielen, wobei die axialen Verschiebungen der Fassungen über die Führungen in definierter Weise miteinander gekoppelt sind. Der Führungsstift der ersten Fassung wird im Zusammenhang mit Ausführungsformen mit zweitem Führungsstift als erster Führungsstift bezeichnet.

Auch die zweite Außenkulisse kann hierbei als Kurvenbahn ausgebildet sein. Die bei einer solchen Anordnung auftretenden Betätigungskräfte sind circa doppelt so groß wie bei nur einer bewegbaren Fassung. Dementsprechend kommt einer Reduzierung der Betätigungskräfte besonders große Bedeutung zu, um ein Verklemmen oder eine Selbsthemmung zu verhindern, was erfindungsgemäß mittels der Führungsstifte mit erstem, zweitem, drittem und viertem Drehlager gelingt. Ein Umkehrsystem mit zwei verschiebbaren Fassungen ist zudem länger und weist längere Kulissen auf. Dies führt zu einer erhöhten thermischen Verformung des Umkehrsystems bei Temperaturwechseln, die im Stand der Technik bei sehr niedrigen Temperaturen zu einem Verklemmen führen. Aufgrund der verbesserten Führung der Führungsstifte in den Kulissen ist auch diese Fehleranfälligkeit deutlich reduziert.

Optional kann der zweite Führungsstift entsprechend den Ausgestaltungsvarianten des ersten Führungsstifts die verschiedenen alternativen Ausgestaltungsmerkmale gemäß vor- und nachstehender Beschreibung aufweisen. Die Vorteile, die sich aus den optionalen Gestaltungen des zweiten Führungsstifts ergeben, gleichen inhaltlich denen des ersten Führungsstifts, sie kommen jedoch bei einer Ausgestaltung mit zwei bewegbaren Fassungen mit optischen Elementen besonders zum Tragen, da die Stellkräfte größer sind, die Reibung erhöht ist und eine hohe Positionsgenauigkeit von zwei verschiebbaren optischen Elementen zu erzielen ist. Besonders bevorzugt sind der erste und zweite Führungsstift baugleich. Vorteilhaft hieran ist die geringe Anzahl unterschiedlicher Bauteile, wodurch die Kosten gering und die Montage einfach ist.

Die Erfindung betrifft außerdem ein Zielfernrohr mit einem tubusförmigen Gehäuse, in dem entlang eines Strahlenganges ein Objektiv und ein Umkehrsystem wie es vor- und nachstehend beschrieben ist angeordnet sind. Das Umkehrsystem ermöglicht eine präzise und komfortable Änderung der Bildvergrößerung auch bei hohen und niedrigen Temperaturen. Durch die hohe Kompaktheit des Umkehrsystems ist auch das Gehäuse schlank ausführbar.

In einer näheren Ausgestaltung ist am Gehäuse ein Verstellmittel gelagert, mit dem die Außenhülse relativ zur Führungshülse drehbar ist. Damit ist die Vergrößerungsänderung komfortabel durchführbar.

Vorzugsweise ist in dem Gehäuse entlang des Strahlenganges ein Absehen angeordnet oder das Zielfernrohr weist ein Einblendmittel zum Einblenden eines Absehens in den Strahlengang auf. Hiermit lässt sich ein Ziel präzise anvisieren.

Ferner betrifft die Erfindung eine Schusswaffe mit einem Lauf und einem Zielfernrohr wie es vor und nachstehend beschrieben ist, wobei das tubusförmige Gehäuse neben dem Lauf angeordnet, gleichgerichtet zu dem Lauf ausgerichtet und direkt oder indirekt mit dem Lauf verbunden ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht eines Umkehrsystems;
- Fig. 2: eine Führungshülse;
- Fig. 3: einen Längsschnitt durch ein Umkehrsystem; und
- Fig. 4: einen Ausschnitt des Längsschnitts durch das Umkehrsystem nach Fig. 3.

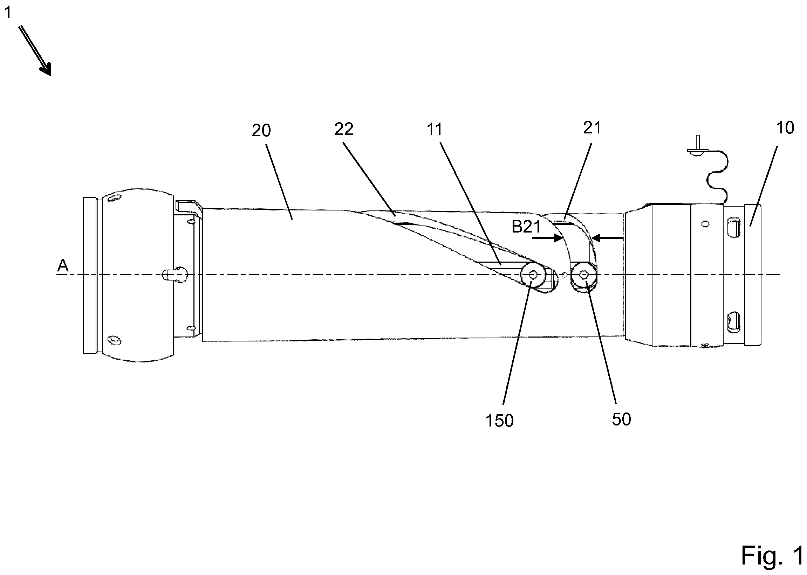

**Fig. 1** zeigt eine Seitenansicht eines Umkehrsystems 1 für Zielfernrohre. Man erkennt, dass eine Führungshülse 10 in einer Außenhülse 20 steckt. Die Außenhülse 20 ist axialfest und drehbar um eine optische Achse A auf der Führungshülse 10 gelagert. In der Führungshülse 10 ist eine Innenkulisse 11 und in der Außenhülse 20 eine Außenkulisse 21 und eine zweite Außenkulisse 22 ausgebildet. Die Außenkulissen 21, 22 sind jeweils als Kurvenbahn ausgestaltet. Ein erster Führungsstift 50 einer ersten Fassung mit einem optischen Element ragt in die Innenkulisse 11 und die Außenkulisse 21 hinein, sodass ein Kurvengetriebe ausgebildet ist. Eine relative Drehbewegung der Außenhülse 20 auf der Führungshülse 10 um die optische Achse A bewirkt eine Verschiebung des ersten Führungsstifts 50 und damit der innenliegenden Fassung inklusive dem optischen Element.

Gleichzeitig ragt ein zweiter Führungsstift 150 einer zweiten Fassung mit einem zweiten optischen Element in die Innenkulisse 11 und die zweite Außenkulisse 22 hinein. Die vorstehend beschriebene Drehbewegung treibt dann den zweiten Führungsstift 150 durch die Innenkulisse 11 und die zweite Außenkulisse 22. Hierdurch wird die zweite Fassung entlang der optischen Achse A verschoben.

Des Weiteren ist in Fig. 1 die Breite B21 der Außenkulisse 21 gekennzeichnet.

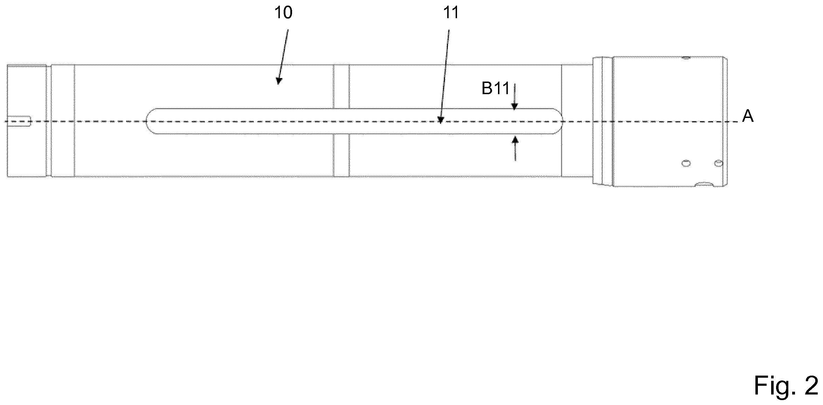

**Fig. 2** zeigt eine seitliche Ansicht einer Führungshülse 10, wie sie in einem Umkehrsystem nach Fig. 1 zum Einsatz kommen kann. Man erkennt hier insbesondere, dass die Innenkulisse 11 eine Linearkulisse ist. Diese erstreckt sich parallel zur optischen Achse A. Außerdem hat die Linearkulisse 11 eine Breite B11.

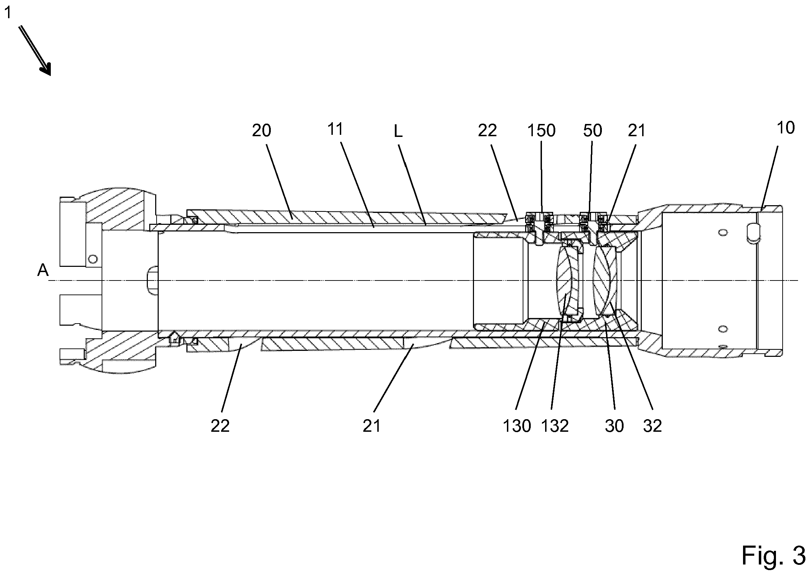

In **Fig. 3** ist ein Längsschnitt durch das Umkehrsystem 1 nach Fig. 1 dargestellt. Hier sieht man vor allem im Detail, wie die Führungshülse 10 in der Außenhülse 20 steckt, und wie die Fassung 30 mit optischem Element 32 und die zweite Fassung 130 mit zweitem optischem Element 132 entlang der optischen Achse A längsverschiebbar in der Führungshülse 10 gelagert sind. Zwischen der Innenhülse 10 und der Außenhülse 20 ist über die Länge der Innenkulisse 11 ein ringförmiger Luftspalt L ausgebildet.

Zudem erkennt man wie der erste und zweite Führungsstift 50, 150 durch die lineare Innenkulisse 11 und die Außenkulisse 21 respektive die zweite Außenkulisse 22 ragen.

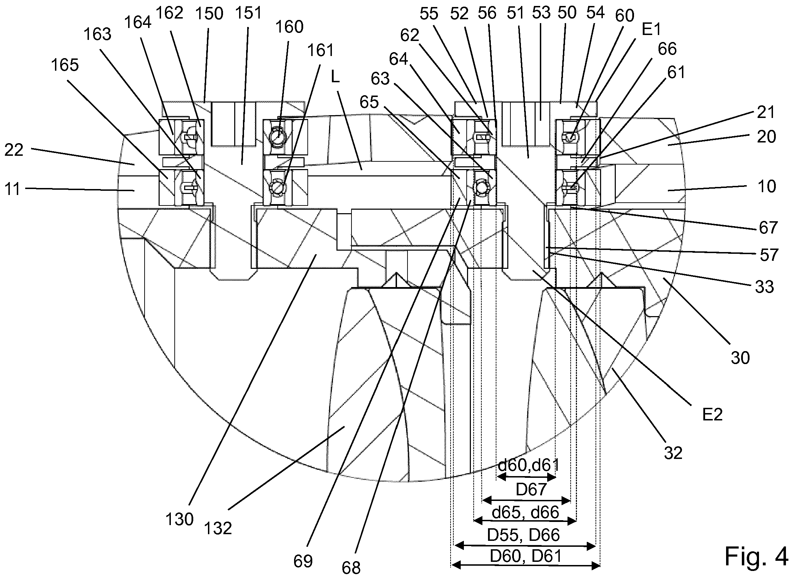

Aus **Fig. 4** gehen insbesondere die Details des ersten und zweiten Führungsstifts 50, 150 hervor, denn hier ist dieser Bereich aus Fig. 3 vergrößert dargestellt.

Der erste Führungsstift 50 weist eine Trägerachse 51 auf, auf der ein erstes Drehlager 60 und ein zweites Drehlager 61 sitzen. Die Trägerachse 51 ist quer, nämlich senkrecht zur Verschiebeachse bzw. optischen Achse A (siehe Fig. 3) der Fassung 30 ausgerichtet. Erkennbar ist das erste Drehlager 60 innerhalb der Außenkulisse 21 und das zweite Drehlager 61 innerhalb der Innenkulisse 11 geführt. Bei dem ersten und zweiten Drehlager 60, 61 handelt es sich jeweils um ein Wälzlager, nämlich ein Kugellager. Das erste Drehlager 60 weist in seinem Zentrum einen auf der Trägerachse 51 sitzenden Innenring 62 und einen drehbar auf dem Innenring 62 gelagerten Außenring 64 auf. Außerdem weist das zweite Drehlager 61 in seinem Zentrum einen auf der Trägerachse 51 sitzenden Innenring 63 und einen drehbar auf dem Innenring 63 gelagerten Außenring 65 auf. Die drehbare Lagerung erfolgt jeweils indirekt über Wälzkörper, nämlich Kugeln, zwischen dem Innenring 62, 63 und dem Außenring 64, 65. Wie man sieht, sind bei näherer Betrachtung der Außenring 64 in der Außenkulisse 21 und der Außenring 65 in der Innenkulisse 11 geführt.

Zwischen den Innenringen 62, 63 des ersten und zweiten Drehlagers 60, 61 sitzt ein erster Abstandhalter 66, der als Distanzringscheibe ausgebildet ist. Insbesondere sitzen das erste und zweite Drehlager 60, 61 sowie der erste Abstandhalter 66 auf einer gemeinsamen zylindrischen Oberfläche 56 der Trägerachse 51.

Außerdem sitzt zwischen dem Innenring 63 des zweiten Drehlagers 61 und der Fassung 30 ein ringscheibenförmiger zweiter Abstandhalter 67 auf der Trägerachse 51. Dieser ist aber nicht mehr auf der zylindrischen Oberfläche 56, sondern auf einem dünneren Abschnitt der Trägerachse 51 angeordnet.

An einem ersten Ende E1 der Trägerachse 51 ist ein Anschlag 52 ausgebildet, der sich an die zylindrischen Oberfläche 56 anschließt.

Die Innenringe 62, 63 des ersten und zweiten Drehlagers 60, 61 sowie der erste und zweite Abstandhalter 66, 67 sind zwischen dem Anschlag 52 der Trägerachse 51 und der Fassung 30 eingespannt. Hierzu weist die Trägerachse 51 an einem zweiten Ende E2 ein Gewinde 57 auf, nämlich ein Außengewinde, das mit einem Gegengewinde 33, nämlich einem Innengewinde, in der Fassung 30 eingeschraubt ist. Hierdurch ist die Einspannung des ersten und zweiten Drehlagers 60, 61 durch die Verschraubung des Gewindes 57 mit dem Gegengewinde 33 bewirkt, insbesondere auch deshalb weil die zylindrischen Oberfläche 56 (geringfügig) kürzer als das Paket bestehend aus den Drehlagern 60,61 und dem ersten Abstandhalter 66 breit ist. Ab einem Mindestdrehmoment sind die Innenringe 62, 63 des ersten und zweiten Drehlagers 60, 61 sowie der erste und zweite Abstandhalter 66, 67 unter normalen Einsatzbedingungen des Umkehrsystems drehfest eingespannt.

Durch die Abstandhalter 66, 67 und den Anschlag 52 sind die Außenringe 64, 65 in axialer Richtung der Trägerachse 51 beabstandet von benachbarten Bauteilen gelagert. Insbesondere berühren sich die Außenringe 64, 65 des ersten und zweiten Drehlagers 60, 61 auch nicht. Weiterhin ist der Außendurchmesser D67 des zweiten Abstandhalters 67 kleiner als der Innendurchmesser d65 des Außenrings 65 des zweiten Drehlagers 61.

Man erkennt außerdem, dass das erste und zweite Drehlager 60, 61 entlang der Trägerachse 51 nicht ineinandergreifen und sich entlang der Trägerachse 51 nicht überlappen. Das erste Drehlager 60 ragt nicht in die Innenkulisse 11 und das zweite Drehlager 61 nicht in die Außenkulisse 21 hinein. Dabei ist das erste Drehlager 60 schmäler (in axialer Richtung der Trägerachse 51) als die Außenkulisse 21. Das zweite Drehlager 61 ist schmäler als die Innenkulisse 11. Das zweite Drehlager 61 ragt geringfügig aus der Innenkulisse 11 hinaus und bis in den Luftspalt L hinein. Der Luftspalt L ist schmäler als das zweite Drehlager 61.

Der Anschlag 52 ist durch einen von der Trägerachse 51 am ersten Ende E1 ausgebildeten Kopfabsatz 54 ausgebildet. Der Kopfabsatz 54 bildet außerdem eine Abdeckplatte 55 aus, die aufgrund eines kleinen Absatzes zum Anschlag 52 beabstandet von dem ersten Drehlager 60 angeordnet ist. Die Abdeckplatte 55 hat einen kreisförmigen Umfang und deckt einen Großteil der Stirnfläche des ersten Drehlagers 60 ab, wobei die Stirnfläche insbesondere aus axialer Richtung der Trägerachse 51 zu betrachten ist. Der Kopfabsatz 54 ist scheibenförmig, ragt geringfügig in die Außenkulisse 21 hinein, steht jedoch auch aus der Außenkulisse 21 hervor. Damit die Abdeckplatte 55 in die Außenkulisse 21 ragen kann, ist der Außendurchmesser D55 der Abdeckplatte 55 kleiner als der Außendurchmesser D60 des ersten Drehlagers 60 und auch kleiner als die Breite B21 (siehe Fig. 1) der Außenkulisse 21.

An dem ersten Ende E1 der Trägerachse 51, insbesondere im Kopfabsatz 54, ist eine Werkzeugöffnung 53 für ein Drehwerkzeug in der Trägerachse 51 ausgebildet. Hierbei handelt es sich um eine Sechskantöffnung. Die Werkzeugöffnung 53 ragt bis in einen Bereich, der radial innerhalb des ersten Drehlagers 61 liegt.

Weiterhin erkennt man in Fig. 4, dass der Außendurchmesser D60 des ersten Drehlagers 60 dem Außendurchmesser D61 des zweiten Drehlagers 61 entspricht. Auch der Innendurchmesser d60 des ersten Drehlagers 60 entspricht dem Innendurchmesser d61 des zweiten Drehlagers 61. Der Innendurchmesser d66 des ersten Abstandhalters 66 entspricht im Wesentlichen den Innendurchmessern d60, d61 des ersten und zweiten Drehlagers 60, 61. Der Innendurchmesser d66 des ersten Abstandhalters 67 kann aber auch geringfügig größer sein, nämlich etwas mehr Passungsspiel aufweisen, als die Innendurchmesser d60, d61 der Drehlager 60, 61. Hierdurch lässt er sich einfacher auf die Trägerachse 51 aufschieben.

Bei genauer Betrachtung fällt auf, dass der erste Abstandhalter 66 im Zentrum eine größere Abstandsdicke aufweist als weiter außen. Hierdurch steht er weiter außen frei zwischen den Drehlagern 60, 61. Im Besonderen ist der Außendurchmesser D66 des ersten Abstandhalters 66 kleiner als der Außendurchmesser D60, D61 des ersten und zweiten Drehlagers 60, 61.

Des Weiteren weisen der Außenring 64 des ersten Drehlagers 60 und der Außenring 65 des zweiten Drehlagers 61 jeweils einen inneren Lagerring 68 und einen hierauf angeordneten äußeren Mantelring 69 auf. Diese sind drehfest miteinander verbunden und bestehen aus unterschiedlichen Materialien. Hierdurch ist ein härteres Material im Lagerring einsetzbar und die Kontaktzone zu den Kulissen 11, 21, 22 kann aus einem weicheren Material bestehen. Hierdurch ist eine Übermaßpassung ohne Spiel ausbildbar.

Der zweite Führungsstift 150 ist baugleich zum ersten Führungsstift 50 ausgebildet. Auch in Fig. 4 erkennt man, dass eine zweite Außenkulisse 22 in der Außenhülse 20 ausgebildet ist, und in der Führungshülse 10 eine zweite Fassung 130 mit einem zweiten optischen Element 132 axialverschieblich angeordnet ist. Der zweite Führungsstift 150 ist mit der zweiten Fassung 130 verbunden und durchdringt die Innenkulisse 11 und die zweite Außenkulisse 22. Der zweite Führungsstift 150 weist eine Trägerachse 151 auf, auf der ein drittes Drehlager 160 und ein viertes Drehlager 161 sitzen. Das dritte Drehlager 160 ist innerhalb der zweiten Außenkulisse 22 und das vierte Drehlager 161 innerhalb der Innenkulisse 11 geführt. Dabei weist das dritte Drehlager 160 und das vierte Drehlager 161 in seinem Zentrum jeweils einen auf der Trägerachse 151 sitzenden Innenring 162, 163 und einen drehbar auf dem Innenring 162, 163 gelagerten Außenring 164, 165 auf.

Hinsichtlich der weiteren Merkmale des zweiten Führungsstifts 150 sei auf die baugleichen Ausgestaltungen des ersten Führungsstifts 50 verwiesen.

Die Erfindung ist nicht auf eine der vorbeschriebenen Ausführungsformen beschränkt, sondern in vielfältiger Weise abwandelbar.

Insbesondere können der erste Führungsstift 50 und der zweite Führungsstift 150 auch ungleich ausgestaltet sein. Durch unterschiedlich starke Steigungen in den Kurvenbahnen der Außenkulissen können nämlich auch abweichende Anforderungen bestehen.

Ein Umkehrsystem wie es in den Figuren beschrieben wird kann zudem Teil eines Zielfernrohrs sein. Ein solches weist regelmäßig ein tubusförmigen Gehäuse auf, in dem entlang eines Strahlenganges ein Objektiv und das erfindungsgemäße Umkehrsystem angeordnet sein können. Am Gehäuse ist ein Verstellring lagerbar, der es erlaubt die Außenhülse 20 auf der Führungshülse 10 zu drehen. Im Gehäuse eines Zielfernrohrs kann entlang des Strahlenganges ein Absehen angeordnet sein oder das Zielfernrohr verfügt über ein Einblendmittel zum Einblenden eines Absehens in den Strahlengang.

Ein solches Zielfernrohr kann an einer Schusswaffe mit einem Lauf festgelegt sein. Das tubusförmige Gehäuse wird hierzu neben dem Lauf angeordnet, gleichgerichtet zu dem Lauf ausgerichtet und direkt oder indirekt mit dem Lauf verbunden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Umkehrsystem | 69 | Mantelring |
| | | | |
| 10 | Führungshülse | 130 | zweite Fassung |
| 11 | Linearkulisse | 132 | zweites optisches Element |
| | | 150 | zweiter Führungsstift |
| 20 | Außenhülse | 151 | Trägerachse |
| 21 | Außenkulisse | 160 | drittes Drehlager |
| 22 | zweite Außenkulisse | 161 | viertes Drehlager |
| | | 162 | Innenring (drittes Drehlager) |
| 30 | Fassung | 163 | Innenring (viertes Drehlager) |
| 32 | optisches Element | 164 | Außenring (drittes Drehlager) |
| 33 | Gegengewinde | 165 | Außenring (viertes Drehlager) |
| | | | |
| 50 | (erster) Führungsstift | A | optische Achse |
| 51 | Trägerachse | B11 | Breite (Linearkulisse) |
| 52 | Anschlag | B21 | Breite (Außenkulisse) |
| 53 | Werkzeugöffnung | D55 | Außendurchmesser (Abdeckplatte) |
| 54 | Kopfabsatz | D60 | Außendurchmesser (erstes Drehlager) |
| 55 | Abdeckplatte | D61 | Außendurchmesser (zweites Drehlager) |
| 56 | zylindrische Oberfläche | d60 | Innendurchmesser (erstes Drehlager) |
| 57 | Gewinde | d61 | Innendurchmesser (zweites Drehlager) |
| | | d65 | Innendurchmesser (Außenring des zweiten |
| 60 | erstes Drehlager | | Drehlagers) |
| 61 | zweites Drehlager | D66 | Außendurchmesser (erster Abstandhalter) |
| 62 | Innenring (erstes Drehlager) | d66 | Innendurchmesser (erster Abstandhalter) |
| 63 | Innenring (zweites Drehlager) | D67 | Außendurchmesser (zweiter |
| 64 | Außenring (erstes Drehlager) | | Abstandhalter) |
| 65 | Außenring (zweites Drehlager) | E1 | erstes Ende (Trägerachse) |
| 66 | erster Abstandhalter | E2 | zweites Ende (Trägerachse) |
| 67 | zweiter Abstandhalter | L | Luftspalt |
| 68 | Lagerring | | |

## Patentansprüche

1. **Umkehrsystem** (1) für Zielfernrohre mit einer Führungshülse (10), einer Außenhülse (20) und einer Fassung (30) mit einem optischen Element (32), wobei die Außenhülse (20) axialfest und drehbar auf der Führungshülse (10) gelagert und in der Führungshülse (10) eine Innenkulisse (11) und in der Außenhülse (20) eine Außenkulisse (21) ausgebildet ist, wobei die Fassung (30) axialverschieblich in der Führungshülse (10) gelagert ist und einen Führungsstift (50) aufweist, der in die Innenkulisse (11) und die Außenkulisse (21) hineinragt, wobei der Führungsstift (50) eine Trägerachse (51) aufweist, auf der ein erstes Drehlager (60) und ein zweites Drehlager (61) sitzen, wobei das erste Drehlager (60) innerhalb der Außenkulisse (21) und das zweite Drehlager (61) innerhalb der Innenkulisse (11) geführt ist, und wobei das erste Drehlager (60) und/oder das zweite Drehlager (61) in seinem Zentrum einen auf der Trägerachse (51) sitzenden Innenring (62, 63) und einen drehbar auf dem Innenring (62, 63) gelagerten Außenring (64, 65) aufweist, wobei das erste Drehlager (60) und das zweite Drehlager (61) jeweils einen auf der Trägerachse (51) sitzenden Innenring (62, 63) und einen drehbar auf dem Innenring (62, 63) gelagerten Außenring (64, 65) aufweist, und wobei zwischen den Innenringen (62, 63) des ersten und zweiten Drehlagers (60, 61) ein erster Abstandhalter (66) angeordnet ist, **dadurch gekennzeichnet, dass** der erste Abstandhalter (66) im Zentrum eine größere Abstandsdicke aufweist als weiter außen, wobei die Innenringe (62, 63) der Drehlager (60, 61) auf Abstand gehalten sind und der äußere, dünnere Teil des ersten Abstandhalters (66) zwischen die Drehlager (60, 61) ragt, ohne diese zu berühren.

2. Umkehrsystem (1) nach Anspruch 1, **dadurch gekennzeichnet, dass** das erste und zweite Drehlager (60, 61) in dem Zentrum zwischen einem Anschlag (52) der Trägerachse (51) und der Fassung (30) eingespannt sind.

3. Umkehrsystem (1) nach Anspruch 2, **dadurch gekennzeichnet, dass** der Anschlag (52) durch einen von der Trägerachse (51) ausgebildeten Kopfabsatz (54) ausgebildet ist.

4. Umkehrsystem (1) nach einem der vorhergehenden Ansprüche, **dadurch gekennzeichnet, dass** die Trägerachse (51) eine Abdeckplatte (55) ausbildet, wobei die Abdeckplatte (55) beabstandet von dem ersten Drehlager (60) angeordnet ist.

5. Umkehrsystem (1) nach Anspruch 4, **dadurch gekennzeichnet, dass** der Außendurchmesser (D55) der Abdeckplatte (55) kleiner ist als der Außendurchmesser (D60) des ersten Drehlagers (60).

6. Umkehrsystem (1) nach einem der vorhergehenden Ansprüche, **dadurch gekennzeichnet, dass** das erste und/oder zweite Drehlager (60, 61) ein Wälzlager ist.

7. Umkehrsystem (1) nach einem der vorhergehenden Ansprüche, **dadurch gekennzeichnet, dass** der oder die Außenringe (64, 65) in axialer Richtung der Trägerachse (51) beabstandet von benachbarten Bauteilen gelagert sind.

8. Umkehrsystem (1) nach einem der vorhergehenden Ansprüche, **dadurch gekennzeichnet, dass** das erste und zweite Drehlager (60, 61) entlang der Trägerachse (51) nicht ineinandergreifen.

9. Umkehrsystem (1) nach einem der vorhergehenden Ansprüche, wobei sich die Außenringe (64, 65) des ersten und zweiten Drehlagers (60, 61) nicht berühren.

10. Umkehrsystem (1) nach einem der vorhergehenden Ansprüche, **dadurch gekennzeichnet, dass** die Trägerachse (61) an einem zweiten Ende (E2) ein Gewinde (57) aufweist, das mit einem Gegengewinde (33) auf Seiten der Fassung (30) verschraubt ist.

11. Umkehrsystem (1) nach einem der vorhergehenden Ansprüche, wobei das zweite Drehlager (61) einen auf der Trägerachse (51) sitzenden Innenring (63) und einen drehbar auf dem Innenring (63) gelagerten Außenring (65) aufweist, **dadurch gekennzeichnet, dass** zwischen dem Innenring (63) des zweiten Drehlagers (61) und der Fassung (30) ein zweiter Abstandhalter (67) angeordnet ist.

12. Umkehrsystem (1) nach einem der vorhergehenden Ansprüche, **dadurch gekennzeichnet, dass** das erste Drehlager (60) nicht in die Innenkulisse (11) hineinragt, und dass das zweite Drehlager (61) nicht in die Außenkulisse (21) hineinragt.

13. Umkehrsystem (1) nach einem der vorhergehenden Ansprüche, **dadurch gekennzeichnet, dass** der Außenring (64) des ersten Drehlagers (60) und/oder der Außenring (65) des zweiten Drehlagers (61) einen inneren Lagerring und einen hierauf angeordneten äußeren Mantelring aufweist.

14. **Zielfernrohr** mit einem tubusförmigen Gehäuse, in dem entlang eines Strahlenganges ein Objektiv und ein Umkehrsystem (1) nach einem der vorhergehenden Ansprüche angeordnet sind.

## Claims

1. **Reversing system** (1) for telescopic sights comprising a guide sleeve (10), an outer sleeve (20) and a socket (30) having an optical element (32), wherein the outer sleeve is mounted axially fixed and rotatably on the guide sleeve (10) and in the guide sleeve (10) an inner slide (11) is formed, and in the outer sleeve (20) an outer slide (21) is formed, wherein the socket (30) is mounted axially displaceably in the guide sleeve (10) and has a guide pin (50) which projects into the inner slide (11) and the outer slide (21), wherein the guide pin (50) has a support axis (51) on which a first pivot bearing (60) and a second pivot bearing (61) sit, wherein the first pivot bearing (60) is guided within the outer slide and the second pivot bearing (61) is guided within the inner slide (11), and wherein the first pivot bearing (60) and/or the second pivot bearing (61) has in its centre an inner ring (62, 63) seated on the support axis (51) and an outer ring (64, 65) rotatably mounted on the inner ring (62, 63), wherein the first pivot bearing (60) and the second pivot bearing (61) respectively have one inner ring (62, 63) seated on the support axis (51) and one outer ring (64, 65) rotatably mounted on the inner ring (62, 63) and wherein a first spacer (66) is arranged between the inner rings (62, 63) of the first and second pivot bearing (60, 61), **characterised in that** the first spacer (66) has a greater spacing thickness in the centre than on the outside, wherein the inner rings (62, 63) of the pivot bearings (60, 61) are kept at a distance and the outer, thinner part of the first spacer (66) protrudes between the pivot bearings (60, 61) without touching these.

2. Reversing system (1) according to claim 1, **characterised in that** the first and second pivot bearings (60, 61) are clamped in the centre between a stop (52) of the support axis (51) and the socket (30).

3. Reversing system (1) according to Claim 2, **characterised in that** the stop (52) is formed by a head section (54) formed by the support axis (51).

4. Reversing system (1) according to any one of the preceding claims, **characterised in that** the support axis (51) forms a cover plate (55), wherein the cover plate (55) is arranged spaced apart from the first pivot bearing (60).

5. Reversing system (1) according to claim 4, **characterised in that** the outer diameter (D55) of the cover plate (55) is smaller than the outer diameter (D60) of the first pivot bearing (60).

6. Reversing system (1) according to any one of the preceding claims, **characterised in that** the first and/or second pivot bearing (60, 61) is a roller bearing.

7. Reversing system (1) according to any one of the preceding claims, **characterised in that** the outer ring or rings (64, 65) are mounted in the axial direction of the support axis (51) spaced apart from adjacent components.

8. Reversing system (1) according to any one of the preceding claims, **characterised in that** the first and second pivot bearings (60, 61) do not mesh with one another along the support axis (51).

9. Reversing system (1) according to any one of the preceding claims, wherein the outer rings (64, 65) of the first and second pivot bearing (60, 61) do not touch.

10. Reversing system (1) according to any one of the preceding claims, **characterised in that** the support axis (61) has a thread (57) at a second end (E2), which is screwed to a counter-thread (33) on the side of the socket (30).

11. Reversing system (1) according to any one of the preceding claims, wherein the second pivot bearing (61) has an inner ring (63) seated on the support axis (51) and an outer ring (65) mounted rotatably on the inner ring (63), **characterised in that** a second spacer (67) is arranged between the inner ring (63) of the second pivot bearing (61) and the socket (30).

12. Reversing system (1) according to any one of the preceding claims, **characterised in that** the first pivot bearing (60) does not protrude into the inner slide (11), and that the second pivot bearing (61) does not protrude into the outer slide (21).

13. Reversing system (1) according to any one of the preceding claims, **characterised in that** the outer ring (64) of the first pivot bearing (60) and/or the outer ring (65) of the second pivot bearing (61) has an inner bearing ring and an outer jacket ring arranged thereon.

14. **Telescopic sight** having a tubular housing in which an objective lens and a reversing system (1) according to any one of the preceding claims are arranged along a beam path.

## Revendications

1. **Système inverseur** (1) pour lunette de visée avec un manchon de guidage (10), un manchon extérieur (20) et une monture (30) avec un élément optique (32), dans lequel le manchon extérieur (20) est monté solidaire axialement et en rotation sur le manchon de guidage (10) et une coulisse intérieure (11) est réalisée dans le manchon de guidage (10) et une coulisse extérieure (21) dans le manchon extérieur (20), dans lequel la monture (30) est montée mobile axialement dans le manchon de guidage (10) et présente une tige de guidage (50), qui fait saillie dans la coulisse intérieure (11) et la coulisse extérieure (21), dans lequel la tige de guidage (50) présente un axe de support (51), sur lequel reposent un premier palier rotatif (60) et un second palier rotatif (61), dans lequel le premier palier rotatif (60) est guidé à l'intérieur de la coulisse extérieure (21) et le second palier rotatif (61) est guidé à l'intérieur de la coulisse intérieure (11), et dans lequel le premier palier rotatif (60) et/ou le second palier rotatif (61) présente en son centre une bague intérieure (62, 63) reposant sur l'axe de support (51) et une bague extérieure (64, 65) montée en rotation sur la bague intérieure (62, 63), dans lequel le premier palier rotatif (60) et le second palier rotatif (61) présente respectivement une bague intérieure (62, 63) reposant sur l'axe de support (51) et une bague extérieure (64, 65) montée en rotation sur la bague intérieure (62, 63), et dans lequel un premier espaceur (66) est disposé entre les bagues intérieures (62, 63) du premier et second palier rotatif (60, 61), **caractérisé en ce que** le premier espaceur (66) présente au centre une épaisseur d'espacement plus importante que plus à l'extérieur, dans lequel les bagues intérieures (62, 63) des paliers rotatifs (60, 61) sont maintenues à distance et la partie extérieure plus mince du premier espaceur (66) fait saillie entre les paliers rotatifs (60, 61), sans toucher ceux-ci.

2. Système inverseur (1) selon la revendication 1, **caractérisé en ce que** le premier et second palier rotatif (60, 61) sont serrés dans le centre entre une butée (52) de l'axe de support (51) et la monture (30).

3. Système inverseur (1) selon la revendication 2, **caractérisé en ce que** la butée (52) est réalisée par un épaulement de tête (54) réalisé par l'axe de support (51).

4. Système inverseur (1) selon l'une quelconque des revendications précédentes, **caractérisé en ce que** l'axe de support (51) réalise une plaque de recouvrement (55), dans lequel la plaque de recouvrement (55) est disposée à distance du premier palier rotatif (60).

5. Système inverseur (1) selon la revendication 4, **caractérisé en ce que** le diamètre extérieur (D55) de la plaque de recouvrement (55) est inférieur au diamètre extérieur (D60) du premier palier rotatif (60).

6. Système inverseur (1) selon l'une quelconque des revendications précédentes, **caractérisé en ce que** le premier et/ou second palier rotatif (60, 61) est un palier à roulement.

7. Système inverseur (1) selon l'une quelconque des revendications précédentes, **caractérisé en ce que** la ou les bagues extérieures (64, 65) sont montées dans la direction axiale de l'axe de support (51) à distance de pièces voisines.

8. Système inverseur (1) selon l'une quelconque des revendications précédentes, **caractérisé en ce que** le premier et second palier rotatif (60, 61) ne s'interpénètrent pas le long de l'axe de support (51).

9. Système inverseur (1) selon l'une quelconque des revendications précédentes, dans lequel les bagues extérieures (64, 65) du premier et second palier rotatif (60, 61) ne se touchent pas.

10. Système inverseur (1) selon l'une quelconque des revendications précédentes, **caractérisé en ce que** l'axe de support (61) présente à une seconde extrémité (E2) un filet (57), qui est vissé avec un filet complémentaire (33) sur des faces de la monture (30).

11. Système inverseur (1) selon l'une quelconque des revendications précédentes, dans lequel le second palier rotatif (61) présente une bague intérieure (63) reposant sur l'axe de support (51) et une bague extérieure (65) montée en rotation sur la bague intérieure (63), **caractérisé en ce qu'**un second espaceur (67) est disposé entre la bague intérieure (63) du second palier rotatif (61) et la monture (30).

12. Système inverseur (1) selon l'une quelconque des revendications précédentes, **caractérisé en ce que** le premier palier rotatif (60) ne fait pas saillie dans la coulisse intérieure (11), et que le second palier rotatif (61) ne fait pas saillie dans la coulisse extérieure (21).

13. Système inverseur (1) selon l'une quelconque des revendications précédentes, **caractérisé en ce que** la bague extérieure (64) du premier palier rotatif (60) et/ou la bague extérieure (65) du second palier rotatif (61) présente une bague de palier intérieure et une bague d'enveloppe extérieure disposée sur celle-ci.

14. **Lunette de visée** avec un boîtier en forme de tube, dans lequel un objectif et un système inverseur (1) selon l'une quelconque des revendications précédentes sont disposés le long d'un trajet optique.
